# EUROPÄISCHE PATENTSCHRIFT

(11) **EP 0 668 800 B1**
(45) Veröffentlichungstag und Bekanntmachung des Hinweises auf die Patenterteilung: **24.02.1999**
(21) Anmeldenummer: 93924517.1
(22) Anmeldetag: 15.11.1993
(51) Int. Cl.: B05D 3/06, G03F 7/031

(54) **VERFAHREN ZUR BLITZTROCKNUNG UND BLITZHÄRTUNG UND STRAHLUNGSHÄRTBARE PRODUKTE**
ELECTRON FLASH DRYING AND CURING PROCESS AND RADIATION-CURABLE PRODUCTS
PROCEDE DE SECHAGE ET DE DURCISSEMENT PAR ECLAIR ELECTRONIQUE, ET PRODUITS DURCISSABLES PAR RAYONNEMENT

(30) Priorität: 17.11.1992 DE 4238841; 28.10.1993 DE 4336748
(43) Veröffentlichungstag der Anmeldung: 30.08.1995
(73) Patentinhaber: Ciba Specialty Chemicals Holding Inc., 4057 Basel (CH)
(72) Erfinder: KNORSCH, Karl, D-97950 Grossrinderfeld (DE); SCHMIDT, Gernot, D-97218 Gerbrunn (DE)
(86) Internationale Anmeldenummer: DE9301082
(87) Internationale Veröffentlichungsnummer: WO9411123

(56) Entgegenhaltungen:
- EP-A- 0 341 534
- DE-A- 1 571 175
- DE-A- 3 126 433
- GB-A- 2 234 976
- US-A- 4 287 228
- RESEARCH DISCLOSURE Nr. 328 , August 1991 , HAVANT GB Seite 618 XP217933 CIBA-GEIGY A.G. 'Photoinitiator Combinations for uv-curable Screen Printing Inks'

## Beschreibung

Die Erfindung betrifft ein Verfahren zum Trocknen und Härten von Lacken, Klebstoffen und anderen strahlungshärtbaren Produkten sowie die zu dessen Ausführung geeigeneten strahlungshärtbaren Produkte und Strahlungsquellen.

Strahlungshärtbare Lacke, Druckfarben und Klebstoffe sind seit geraumer Zeit bekannt. Neben der IR-Härtung hat insbesondere die Härtung mit UV-Strahlung praktische Bedeutung erlangt. Neben der relativ kurzen Härte- bzw. Trocknungszeit ist besonders vorteilhaft, daß für die UV-Härtung sogenannte lösungsmittelarme bzw. lösungsmittelfreie Lacke und andere UV-härtbare Produkte Verwendung finden.

Als Strahlungsquellen für die UV-Trocknung bzw. -Härtung haben sich wassergekühlte UV-Lampen wie Quecksilberdampf-Hochdrucklampen eingeführt. Ein wesentlicher Nachteil ist die relativ hohe Wärmestrahlung. Diese führt zur unerwünschten Filmbildung an der Oberfläche der zu härtenden Schicht und oftmals zu einer nachteiligen Wärmebelastung des mit der Schicht versehenen Gegenstandes. Anstelle üblicher UV-Lampen mit im Inneren angebrachten Elektroden wurden auch bereits UV-Strahler vorgeschlagen, bei denen die Energie für die Bildung und Aufrechterhaltung des Plasmas mittels Mikrowellen-Strahlung in die innenelektrodenfreie Entladungsröhre eingespeist wird.

Obgleich die Trocknungs- bzw. Härtezeiten bei diesen Verfahren gegenüber jenen bei Wärmehärtung wesentlich verringert sind und größenordnungsmäßig Minuten betragen, besteht in der Praxis oftmals der Wunsch nach wesentlich schnellerer Trocknung bzw. Härtung.

Es wurde auch bereits vorgeschlagen, die Härtezeiten dadurch zu verkürzen, daß zur Härtung sehr kurzwellige UV-Strahlung von unter 200 nm Wellenlänge, vorzugsweise in Form von kurzzeitigen Energieimpulsen, verwendet wird.

Als geeignete Strahlungsquellen wurden insbesondere VUV-Excimerstrahler, beispielsweise zur Trocknung von bedruckten Bogen in einer Offset-Druckmaschine, vorgeschlagen. Derartige Strahlungsquellen sind nicht nur sehr aufwendig, sondern wenig geeignet zum Einsatz unter normalen Fabrikationsbedingungen.

Aus DE-A-15 17 175 ist ein Verfahren zum Härten von ungesättigten, lufttrocknenden Polyesterharzmassen, die einen Photosensibilisator enthalten, bekannt, bei dem eine oder mehrere, mit inertem Gas gefüllte, elektrische Quartzblitzröhre(n) mit einer Leistungsaufnahme von mindestens 50 Ws pro Blitz als Strahlungsquelle dient (dienen). Als bevorzugte Photosensibilisatoren werden synergistische Kombinationen von 1-Chlormethylnaphthalin mit 2-Naphthalinsulfonylchlorid oder von 1-Chlormethylnaphthalin mit 2-Chloranthrachinon in Konzentrationen von 0.5 bis 5% genannt.

Ein weiterer Nachteil der bislang bekannten Verfahren zur Strahlungstrocknung bzw. Strahlungshärtung besteht darin, daß der apparative Aufwand beträchtlich ist und sich grundsätzlich nicht zum transportablen Einsatz eignet. Um eine gleichmäßige Trocknung und Härtung mit UV-Röhren bzw. -Lampen zu erzielen, ist es erforderlich, dafür zu sorgen, daß die mit der strahlungshärtbaren Abmischung beschichteten Flächen in annähernd gleichem Abstand von der bzw. den Strahlern angeordnet sind.

Um den die Strahlungshärtung behindernden Einfluß von Sauerstoff auszuschließen, bedarf es nach dem bisherigen Stand der Technik besonderer Maßnahmen wie Strahlungseinwirkung unter Luftausschluß oder Zusätze zu den zu härtenden Abmischungen, die einen Schutzfilm auf der Oberfläche bilden, der später entfernt werden muß.

Ein weiterer Nachteil der bekannten Verfahren zur Strahlungshärtung ist, daß diese dazu neigen, ein Vergilben der Lackschicht bzw. der Kunststoffunterlagen zu bewirken.

Der Erfindung liegt die Aufgabe zugrunde, die obenangeführten Nachteile zu vermeiden und mit möglichst geringem Aufwand die Strahlungstrocknung bzw. Strahlungshärtung hierfür geeigneter, strahlungshärtbarer Produkte in verläßlicher und wirtschaftlicher Weise zu erzielen.

Diese Aufgabe wird durch die kennzeichnenden Merkmale des Verfahrensanspruchs 1 gelöst. Vorteilhafte Weiterbildungen des Verfahrens sowie dafür geeignete strahlungshärtbare Abmischungen und Einrichtungen ergeben sich aus den Ansprüchen 2 bis 11.

Überraschenderweise werden alle Nachteile der bisherigen Verfahren zur Strahlungstrocknung bzw. Strahlungshärtung durch die erfindungsgemäße Kombination einer Blitzlicht-Strahlungsquelle, deren erfindungswesentliche Strahlung im UV-B, UV-A und visuellen Bereich liegt und praktisch frei von Strahlung im UV-C Bereich ist, mit einer strahlungshärtbaren Abmischung, die eine Mehrzahl von Photoinitiatoren enthält, die in Kombination den Bereich von UV-B bis in den sichtbaren Bereich, vorzugsweise bis etwa 500 nm überdecken, vermieden.

Nach der bevorzugten Ausführung des Verfahrens nach der Erfindung wird die Härtung mittels einer Mehrzahl von aufeinander folgenden Blitzentladungen bewirkt.

Um entsprechend kurze Trocknungs- bzw. Härtungszeiten zu erzielen, werden nach der beanspruchten Erfindung Blitzstrahlungsquellen benutzt, die an der zu trocknenden bzw. härtenden Oberfläche eine Beleuchtungsstärke von mindestens 10 Megalux bewirken und vorteilhafterweise 80 Megalux nicht übersteigen.

Nach einer vorzugsweisen Ausführung des Verfahren wird die Spektralverteilung der Blitzstrahlung und der Sensitivitätsbereich der Photoinitiatoren mittels der Auswahl der Photoinitiatoren und Steuerung der Blitzentladungs-Stromdichte und -Dauer aufeinander abgestimmt.

Überraschenderweise kann das erfindungsgemäße Verfahren ohne Nachteil unter normalen atmosphärischen Bedingungen durchgeführt werden. Ohne an diese Ausführungen gebunden zu sein, wird angenommen, daß die hohe wirksame Blitzlichtenergie und kurze Einwirkungszeit zu einer derart schnell verlaufenden Trocknung bzw. Härtung führt, daß es zu keiner schädlichen Einwirkung von Sauerstoff aus der Luft kommt.

Weiterhin führt das Verfahren nach der Erfindung zu keiner oder zu vernachlässigbarer Vergilbung der zu härtenden Schicht bzw. der diese tragenden Kunststoffunterlage.

In einer Weiterbildung der Erfindung wird eine Mehrzahl von Blitzentladungsröhren als Strahlungsquelle benutzt.

Überraschenderweise kann durch die Auswahl von Menge und Art der Photoinitiatoren bewirkt werden, daß die Härtung entweder, von der Oberfläche beginnend, mit weiteren Blitzentladungen fortschreitend zur Gesamthärtung führt oder in umgekehrter Richtung verläuft.

### BEISPIEL 1

Zusammensetzung einer erfindungsgemäß von unten nach oben härtenden Abmischung, beispielsweise für Flüssigspachtel bzw. Dickschichten:
- 37.7 %: Polyetheracrylat
- 40.0 %: Aliphatisches Urethanacrylat
- 10.0 %: Tripropylenglykoldiacrylat
- 10.0 %: Ethoxyliertes Triomethylolpropantriacrylat
- 0.4 %: Alkylbenzophenon
- 1.0 %: p-Phenylbenzophenon
- 0.5 %: Phenylhydroxyalkanon
- 0.4 %: Netzmittel

### BEISPIEL 2

Zusammensetzung einer erfindungsgemäß von oben nach unten härtenden Abmischung, beispielsweise für das Lackieren von Bleistiftkuppen:
- 57.4 %: Polyesteracrylat
- 8.0 %: Ethoxyliertes Triomethylolpropantriacrylat
- 32.8 %: Polyetheracrylat
- 0.8 %: Alkylphosphinoxyd
- 0.5 %: Benzophenon

### BEISPIEL 3

Zusammensetzung einer für das Verfahren nach der Erfindung geeigneten Abmischung zur Härtung von pigmentierten Systemen:
- 12.0 %: Polyesteracrylat
- 16.0 %: Ethoxyliertes Triomethylolpropantriacrylat
- 19.7 %: Tripropylenglykoldiacrylat
- 30.0 %: Polyetheracrylat
- 0.5 %: aromatische Ketone
- 0.8 %: Alkylphosphinoxyd
- 0.5 %: p-Phenylbenzophenon
- 0.5 %: Phenylhydroxyalkanon
- 20.0 %: Pigmente und Füllstoffe

### BEISPIEL 4

Zusammensetzung einer für das Verfahren nach der Erfindung geeigneten, wasserverdünnbaren Abmischung:
- 25.0 %: Polyesteracrylat
- 68.8 %: Wasser
- 1.5 %: Verdickungsmittel
- 0.2 %: Netzmittel
- 1.0 %: Phenylhydroxyalkanon
- 0.5 %: Kombination von Alkylketonen
- 3.0 %: Mattierungsmittel

### BEISPIEL 5

Vorteilhafte Photoinitiatoren, Harze und Reaktif-Verdünner für erfindungsgemäße Abmischungen:
a)
   - Aromatische Ketone: 0.3 - 0.5 %
   - Alkylphosphinoxyd: 0.4 - 0.8 %
   - p-Phenylbenzophenon: 0.4 - 0.6 %
   - Phenylhydroxyalkanon: 0.8 - 1.2 %
b)
   - Polyesteracrylat: 10 - 15 %
   - Urethalacrylat: 10 - 15 %
   - Polyetheracrylat: 35 - 45 %
   - Oligoetheracrylat: 35 - 40 %

Soll beispielsweise Hirnholz in der bislang üblichen Weise mit einer UV-härtbaren Lackschicht vesehen werden, so erfordert dessen starke Kapillarwirkung, eine Isolierung zwischen Hirnholzoberfläche und Lackauftrag vorzusehen. Durch die Kombination der Photoinitiatoren, wie beispielsweise im Beispiel 1, wird eine Polymerisation mit der ersten Blitzbestrahlung von unten her angeregt, so daß eine Aushärtung selbst in den Kapillaren erzielt wird. Nachfolgende Blitze bewirken die Aushärtung der gesamten Schicht.

Bei pigmentierten Abmischungen ist es gleichsfalls erforderlich, den Härtevorgang von unten nach oben zu steuern, da anders ein Durchdringen der Blitzstrahlung durch eine oberflächlich gehärtete, pigmentierte Schicht nicht gewährleistet bzw. ausgeschlossen ist.

Dickschichten gleichmäßig zu mattieren war bisher nur durch Zusatz eines großen Anteils and Mattierungsmittel zu erzielen. Ein solcher Zusatz führt jedoch zur unerwünschten Erhöhung der Viskosität und unter Umständen zur Versprödung der Lackschicht. Die Steuerung des Härtevorgangs von unten nach oben gestattet es, mit wesentlich geringeren Mengen an Mattierungsmittel auszukommen.

Die Kombination der Photoinitiatoren zur Härtung von oben nach unten, beispielsweise nach Beispiel 2, eignet sich für extrem dicke, zu trocknende und zu härtende Schichten. Die Oberfläche wird bereits durch die erste Blitzstrahlung gehärtet. Die darunter liegenden Bereiche der Schicht werden durch nachfolgende Blitze progressiv ausgehärtet. Die Anzahl der erforderlichen Blitzbestrahlungen ist eine Funktion der Schichtdicke. Anwendungsgebiete sind beispielsweise die Härtung von transparenten Flüssigspachteln bzw. die Hochglanzbeschichtung von Holzwerkstoffen.

Das Verfahren nach der Erfindung eignet sich insbesondere auch zum Aufbringen von Lack- bzw. Schutzschichten auf optischen Oberflächen, einschließlich solchen von Brillengläsern, Linsen, Spiegeln und Visieren aus Kunststoffen.

### BEISPIEL 6

Die folgende Abmischung eignet sich zum Aufbringen von wasserabstoßenden kratzfesten, säure-, laugen- und wasserdampfbeständigen Schutzschichten für optische Artikel aus Kunststoffen:
- 30 - 40 Teile: Multifunktionelles Melaminacrylat
- 70 - 60 Teile: trifunktioneller Reaktifverdünner
- 0.5-1.5 Teile: p-phenylbenzophenon
- 1.5- 3 Teile: Methylmethylthiophenylmorpholinopropanon
- 0.1-0.5 Teile: Polyethermodifizierte Dimethylpolysiloxan Copolymere

Bei erfindungsgemäßer Auswahl der Photoinitiatoren und Härten mittels Blitzlicht-Strahlungsquelle genügt eine Strahlungseinwirkung von Millisekunden Dauer, so daß ein Vergilben vermieden wird. Die gehärtete Schutzschicht zeigt auch bei nachträglicher UV-Einwirkung durch z.B. Sonnenlicht hohe Resistenz gegen Vergilben.

Da bei der Aushärtung mit Blitzlicht-Strahlung praktisch keine Erwärmung erfolgt, wird die Gefahr einer Verformung des bestrahlten Gegenstandes vollständig vermieden.

Die relativ hohe Strahlungsenergie gestattet das Anbringen der Strahlungsquelle in einer Entfernung von der auszuhärtenden Oberfläche, die genügt, um auch bei Formteilen eine ausreichend gleichmäßige Bestrahlung sicherzustellen.

### VERGLEICHSBEISPIEL 7

Die Abmischung nach diesem Beispiel eignet sich zum Aufbringen von kratzfesten Anti-Beschlag-Schichten. Im Gegensatz zum Stand der Technik können diese Schichten erfindungsgemäß mittels Blitzstrahlung anstelle der üblichen thermischen Härtung ausgehärtet werden. Damit gelingt es, derartige Beschichtungen praktisch ohne thermische Belastung des zu beschichtenden Materials und in wirtschaftlicher Weise herzustellen.
- 6 - 10 Teile: Multifunktionelles Melaminacrylat
- 5 - 8 Teile: Polyetheracrylatoligomer
- 9 - 12 Teile: Epoxyacrylat
- 6 - 10 Teile: ethoxyliertes Trimethylolpropantriacrylat
- 9 - 12 Teile: Isodecylacrylat
- 40 - 60 Teile: Lösungsmittelgemisch aus Alkoholen, Glykolether und Acetaten
- 0.6-1.2 Teile: p-Phenylbenzophenon
- 0.1-0.3 Teile: Polyethermodifizierte Dimethylpolysiloxan Copolymere
- 4 - 6 Teile: Polysiloxanpolyethercopolymer

Das erfindungsgemäße Verfahren zeichnet sich durch einen außerordentlich hohen Wirkungsgrad der Strahlungstrocknung bzw. -Strahlungshärtung aus. Damit ist es möglich, mit relativ kompakten Blitzlichteinrichtungen auszukommen. Bevorzugt werden Elektronen-Blitzgeräte mit einer Leistung von 1 bis 10 kJoule pro Blitzröhre benutzt. Derartige Einrichtungen sind nicht nur in der Regel wirtschaftlicher im Bezug auf den Energieverbrauch, sondern gestatten es, sie in leicht transportabler Form auszubilden. Damit wird es auch möglich, die Blitztrocknung bzw. Blitzhärtung am Einsatzort von Lackierarbeiten, beispielsweise zur schnellen Härtung von Türen, Einrichtungs- und anderen lackierten Gegenständen an Ort und Stelle, in Bauwerken, Werkstätten und Privathäusern auszuführen.

Das Verfahren eignet sich grundsätzlich zur Strahlungstrocknung und Strahlungshärtung eines weiten Spektrums von erfindungsgemäßen Abmischungen wie Lacken, Klebschichten, Farben, Maskenschichten und dergleichen.

## Patentansprüche

1. Verfahren zum Trocknen und Härten von durch Strahlungseinwirkung härtbaren Abmischungen aus der Gruppe der Lacke, Farben, Klebstoff- und Kunststoffschichten mittels einer oder mehrerer Hochenergie-Elektronenblitzlicht-Strahlungsquelle(n), dadurch gekennzeichnet, daß die strahlungshärtbaren Abmischungen eine Mehrzahl von Photoinitiatoren aus der Reihe von Alkylphosphinoxid, aromatischen Ketonen und Benzophenon enthalten, die, in Kombination, einen Absorbtionsbereich ergeben, der von UV-B bis in den an UV-A angrenzenden sichtbaren Bereich unterhalb 500 nm reicht; und daß die in den Abmischungen vorhandenen Photoinitiatoren und deren Konzentration so gewählt wird, daß damit, je nach Wahl dieser Parameter, bei Härtung mittels aufeinanderfolgender Blitzentladungen die Richtung der Härtung von der Oberfläche der Abmischung nach unten bzw. umgekehrt bestimmt wird; daß die Emission der Strahlungsquelle(n) im UV-C Bereich vernachlässigbar gering ist; daß der Sensitivitätsbereich der Photoinitiatoren-Kombination und die Emission der Strahlungsquellen aneinander angepaßt sind; und daß die Beleuchtungsstärke an der Oberfläche der zu trocknenden bzw. zu härtenden Abmischungen mindestens 10 Megalux pro Blitzentladung beträgt

2. Das Verfahren nach Anspruch 1, dadurch gekennzeichnet, daß die Abmischungen
a) für die Härtung von unten nach oben
Aromatische Ketone 0.5 %
Alkylphosphinoxid 0.8 %
p-Phenylbenzophenon 0.5 %
Phenylhydroxyalkanon 0.5 %
b) für die Härtung von oben nach unten
Alkylphosphinoxyd 0.4 %
p-Phenylbenzophenon 1.0 %
Phenylhydroxyalkanon 0.5 %
enthalten.

3. Das Verfahren nach Anspruch 1, dadurch gekennzeichnet, daß eine Abmischung benutzt wird, die mindestens drei Photoinitiatoren in Kombination enthält.

4. Das Verfahren nach Anspruch 1, dadurch gekennzeichnet, daß die Beleuchtungsstärke 10 bis 80 Megalux pro Blitzentladung beträgt.

5. Das Verfahren nach Anspruch 1, dadurch gekennzeichnet, daß eine zur Verwendung als Flüssigspachtel bzw. für Dickschichten zur Härtung von unten nach oben geeignete Abmischung verwendet wird, die
37.7 % Polyetheracrylat
40.0 % Aliphatisches Urethanacrylat
10.0 % Tripropylenclykoldiacrylat
10.0 % Ethoxyliertes Triomethylolpropantriacrylat
0.4 % Alkylbenzophenon
1.0 % p-Phenylbenzophenon
0.5 % Phenylhydroxyalkanon
0.4 % Netzmittel
enthält.

6. Das Verfahren nach Anspruch 1, dadurch gekennzeichnet, daß eine zum Lackieren von Bleistiftkuppen zur Härtung von oben nach unten geeignete Abmischung, verendet wird, die
57.4 % Polyesteracrylat
32.8 % Polyetheracrylat
8.0 % Ethoxyliertes Triomethylolpropantriacrylat
0.8 % Alkylphosphinoxyd
0.5 % Benzophenon
enthält.

7. Das Verfahren nach Anspruch 1, dadurch gekennzeichnet, daß eine pigmentierte, für die Härtung von unten nach oben geeignete Abmischung verwendet wird, die
12.0 % Polyesteracrylat
16.0 % Ethoxyliertes Triomethylolpropantriacrylat
19.7 % Tripropylenglykoldiacrylat
30.0 % Polyetheracrylat
0.5 % aromatische Ketone
0.8 % Alkylphophinoxyd
0.5 % p-Phenylbenzophenon
0.5 % Phenylhydroxyalkanon
20.0 % Pigmente und Füllstoffe
enthält.

8. Das Verfahren nach Anspruch 1, dadurch gekennzeichnet, daß eine wasserverdünnbare, pigmentierte Abmischung zur Härtung von unten nach oben benutzt wird, die
25.0 % Polyesteracrylat
68.8 % Wasser
2.5 % Verdickungsmittel
0.2 % Netzmittel
1.0 % Phenylhydroxyalkanon
0.5 % Kombination von Alkylketonen
3.0 % Mattierungsmittel
enthält.

9. Das Verfahren nach Anspruch 1, dadurch gekennzeichnet, daß es zum Beschichten von Gegenständen aus der Reihe von Linsen, Spiegeln, Schutzschilden und Fenstern mit einer kratzfesten, wasserabstoßenden, Säure- und Laugen- beständigen Schutzschicht dient.

10. Das Verfahren nach Anspruch 9, dadurch gekennzeichnet, daß die Gegenstände aus Kunststoff bestehen.

## Claims

1. A process for drying and curing radiation-curable compositions from the group consisting of coating materials, inks, adhesive films and plastics layers by means of one or more high-energy electronic flashlight radiation sources, wherein the radiation-curable compositions comprise a plurality of photoinitiators from the alkylphosphine oxide, aromatic ketone and benzophenone series which in combination give rise to an absorption range which extends from UV-B to the UV-A-adjacent visible region below 500 nm; and wherein the photoinitiators present in the compositions, and the concentration of the said photoinitiators, are chosen such that, depending on the choice of these parameters, the direction of curing from the surface of the composition downwards or vice versa, in the case of curing by means of successive flash discharges, is defined thereby; wherein the emission of the radiation source(s) in the UV-C region is negligible; wherein the sensitivity range of the photoinitiator combination and the emission of the radiation sources are matched to one another; and wherein the level of illumination at the surface of the compositions to be dried and to be cured is at least 10 megalux per flash discharge.

2. The process according to claim 1, wherein the compositions comprise
a) for curing from the bottom upwards
aromatic ketones 0.5%
alkylphosphine oxide 0.8%
p-phenylbenzophenone 0.5%
phenylhydroxyalkanone 0.5%
b) for curing from the top downwards
alkylphosphine oxide 0.4%
p-phenylbenzophenone 1.0%
phenylhydroxyalkanone 0.5%.

3. The process according to claim 1, wherein a composition is used which comprises at least three photoinitiators in combination.

4. The process according to claim 1, wherein the level of illumination is from 10 to 80 megalux per flash discharge.

5. The process according to claim 1, wherein a composition is used which is suitable for use as a liquid filler or for thick layers and for curing from the bottom upwards, and comprises
37.7% of polyether acrylate
40.0% of aliphatic urethane acrylate
10.0% of tripropylene glycol diacrylate
10.0% of ethoxylated trimethylolpropane triacrylate
0.4% of alkylbenzophenone
1.0% of p-phenylbenzophenone
0.5% of phenylhydroxyalkanone
0.4% of wetting agent.

6. The process according to claim 1, wherein a composition is used which is suitable for coating the bodies of pencils and for curing from the top downwards, and comprises
57.4% of polyester acrylate
32.8% of polyether acrylate
8.0% of ethoxylated trimethylolpropane triacrylate
0.8% of alkylphosphine oxide
0.5% of benzophenone.

7. The process according to claim 1, wherein a pigmented composition is used which is suitable for curing from the bottom upwards and comprises
12.0% of polyester acrylate
16.0% of ethoxylated trimethylolpropane triacrylate
19.7% of tripropylene glycol diacrylate
30.0% of polyether acrylate
0.5% of aromatic ketones
0.8% of alkylphosphine oxide
0.5% of p-phenylbenzophenone
0.5% of phenylhydroxyalkanone
20.0% of pigments and fillers.

8. The process according to claim 1, wherein a water-dilutable pigmented composition is used which is suitable for curing from the bottom upwards and comprises
25.0% of polyester acrylate
68.8% of water
2.5% of thickener
0.2% of wetting agent
1.0% of phenylhydroxyalkanone
0.5% of a combination of alkyl ketones
3.0% of matting agent.

9. The process according to claim 1, which is used to coat articles from the series consisting of lenses, mirrors, protective shields and windows with a scratchproof, water-repellent, acid- and alkali-resistant protective coat.

10. The process according to claim 9, wherein the articles consist of plastic.

## Revendications

1. Procédé de séchage et de durcissement de compositions durcissables sous l'action du rayonnement choisies parmi les laques, les matières colorantes, les couches de colle et de matière plastique, au moyen d'une ou de plusieurs sources de rayonnement de lumière d'éclairs électroniques de haute énergie, caractérisé en ce que, les compositions durcissables sous l'action du rayonnement contiennent une multitude de photoinitiateurs choisis parmi les oxydes d'alkylphosphine, les cétones aromatiques et la benzophénone, qui, en combinaison, permettent d'obtenir un domaine d'absorption, qui s'étend de l'UV-B jusque dans le domaine visible à la limite de l'UV-A au-dessous de 500 nm; et en ce que l'on choisit les photoinitiateurs présents dans les préparations et leur concentration de façon à déterminer, respectivement selon le choix de ces paramètres, par durcissement au moyen de décharges successives de flashes, la direction du durcissement de la surface de la composition vers l'intérieur ou le contraire; en ce que l'émission de la ou des sources de rayonnement dans le domaine UV-C est faible de manière à être négligeable; en ce que le domaine de sensibilité du mélange de photoinitiateurs et l'émission des sources de rayonnement sont ajustés l'un avec l'autre; et en ce que l'intensité de l'insolation à la surface des compositions à sécher, respectivement à durcir, est d'au moins 10 mégalux par décharge de flash.

2. Procédé selon la revendication 1, caractérisé en ce que les préparations contiennent
a) pour le durcissement des couches inférieures vers les couches supérieures
des cétones aromatiques 0,5%
de l'oxyde d'alkylphosphine 0,8%
de la p-phénylbenzophénone 0,5%
de la phénylhydroxyalcanone 0,5%
b) pour le durcissement des couches supérieures vers les couches inférieures
de l'oxyde d'alkylphosphine 0,4%
de la p-phénylbenzophénone 1,0%
de la phénylhydroxyalcanone 0,5%.

3. Procédé selon la revendication 1, caractérisé en ce qu'on utilise une préparation qui contient un mélange d'au moins trois photoinitiateurs.

4. Procédé selon la revendication 1, caractérisé en ce que l'intensité d'insolation est de 10 à 80 mégalux par décharge de flash.

5. Procédé selon la revendication 1, caractérisé en ce qu'on utilise une composition destinée à l'emploi comme mastic liquide ou pour des couches épaisses, appropriée au durcissement du bas vers le haut, qui contient
37,7% de polyéther-acrylate
40,0% d'uréthanne-acrylate aliphatique
10,0% de diacrylate de tripropylèneglycol
10,0% de triacrylate de triméthylolpropane éthoxylé
0,4% d'alkylbenzophénone
1,0% de p-phénylbenzophénone
0,5% de phénylhydroxyalcanone
0,4% d'agent de réticulation

6. Procédé selon la revendication 1, caractérisé en ce qu'on utilise une composition pour le laquage de bouts de crayons, appropriée au durcissement du haut vers le bas, qui contient
57,4% de polyester-acrylate
32,8% de polyéther-acrylate
8,0% de triacrylate de triméthylolpropane éthoxylé
0,8% d'oxyde d'alkylphosphine
0,5% de benzophénone

7. Procédé selon la revendication 1, caractérisé en ce qu'on utilise une composition pigmentée, appropriée pour le durcissement du bas vers le haut, qui contient
12,0% de polyester-acrylate
16,0% de triacrylate de triméthylolpropane éthoxylé
19,7% de diacrylate de tripropylèneglycol
30,0% de polyéther-acrylate
0,5% de cétones aromatiques
0,8% d'oxyde d'alkylphosphine
0,5% de p-phénylbenzophénone
0,5% de phénylhydroxyalcanone
20,0% de pigments et charges

8. Procédé selon la revendication 1, caractérisé en ce qu'on utilise une composition pigmentée diluable à l'eau, pour le durcissement du bas vers le haut, qui contient
25,0% de polyester-acrylate
68,8% d'eau
2,5% d'agent épaississant
0,2% d'agent de réticulation
1,0% de phénylhydroxyalcanone
0,5% de combinaison d'alkylcétones
3,0% d'agent de ternissage

9. Procédé selon la revendication 1, caractérisé en ce qu'il est utilisé pour le revêtement d'objets choisis parmi les lentilles, les miroirs, les écrans de protection et les fenêtres avec une couche de protection résistante aux rayures, hydrophobe, résistante aux acides et aux bases.

10. Procédé selon la revendication 9, caractérisé en ce que les objets sont en matières plastiques.
